# EUROPEAN PATENT APPLICATION

(11) **EP 2 830 365 A1**
(43) Date of publication of application: **28.01.2015**
(21) Application number: 13195712.8
(22) Date of filing: 04.12.2013
(51) Int. Cl.: H04W 52/02, H04M 15/00, H04W 88/04, H04L 29/06, H04W 72/04, H04M 7/00

(54) **Portable voice routing apparatus, a system, and a method for processing telephony voice communication**

(30) Priority: 06.06.2013 US 201361831652 P
(71) Applicant: Arcadyan Technology Corp., Hsinchu 300 (TW)
(72) Inventor: Chen, Gwo-Liang, 300 Hsinchu (TW); Pao, Lih-Gwo, 105 Taipei City (TW); Chiou, Jyh-Tzong, 114 Taipei City (TW); Chen, Chien-Lin, 114 Taipei City (TW)
(74) Representative: Viering, Jentschura & Partner Patent- und Rechtsanwälte

(57) **Abstract**

Disclosure herein is related to a portable voice routing apparatus (30), a system, and a method for processing a telephony voice call. In an exemplary embodiment of the invention, the portable voice routing apparatus (30) provides a local network protocol service for the local-end terminal devices, and renders a connection bridging a mobile communication network. When the terminal device initiates a telephony voice communication procedure, the portable voice routing apparatus (30) transmits the voice packets carried with subscriber identity information. Therefore the terminal device may establish a voice communication with a recipient over PSTN or network. At the recipient, a message with an incoming call is shown due to the received subscriber identity information. The recipient may therefore call back for bi-directional voice communication according to this message.

## Description

### BACKGROUND OF THE INVENTION

### 1. Field of the Invention

The present invention is generally related to a portable voice routing apparatus, a system, and a method for processing telephony voice communication; in particular, to the voice routing apparatus, method and system disposing the apparatus that conducting voice communication over a mobile communication network.

### 2. Description of Related Art

The general network-based VoIP (Voice over IP) service performs the voice communication by an Analog-to-Digital conversion made to the voice signals. In the process, the signals are compressed into network packets that deliver the voice packets to a recipient over network. Then, a Digital-to-Analog conversion is performed to the network packets into voice signals to be played. The VoIP may effectively reduce the lag time.

To the device employing VoIP technology, an Analog-to-Digital converter in the device converts and compresses the user's voice into digital voice packets. The voice packets are delivered to a recipient over Internet. Noted that the Internet-based voice communication may not afford the high-priced telecommunication fee.

In the general process of bi-directional communication over the network, the VoIP recipient has no way to reply the call by any phone number since the incoming call is converted from Internet packets to PSTN signals.

While delivering the network voice such as VoIP according to conventional technology, both outgoing and incoming calls may be identified by the IDs extracted from the packets generated by the same network messaging software, for example Skype. If only the outgoing call is created, the service provider receives the call and bridges it to PSTN for the recipient over wireless or wired last telephone line.

It was a conventional technology that displays the network-based incoming call as it is forwarded. In which, the service provider uses a device to deliver and package the information associated with the incoming call. The call information is provided for the user to reply the call or dial out. For example, R.O.C. Patent No.I294240, published on March 1, 2008, has disclosed a telephone transfer device that respectively connects with Internet and fixed-line network. The telephone transfer device delivers the voice signals to remote network device over Internet. The telephone transfer device may be disposed at the caller end, and therefore used to transfer the fixed-line telephone signals and network signals simultaneously. When the voice packets are transferred, the information associated with the incoming call is carried over the fixed-line network for the recipient. The network device at the recipient end translates the incoming call and displays the extracted information. The recipient may therefore acknowledge the incoming call number.

### SUMMARY OF THE INVENTION

The disclosure is related to a portable voice routing apparatus according to the present invention. The disclosure is also related a system and a method for processing telephony voice communication by the voice routing apparatus. The system is constituted, but not limited to, to serve voice communication over a mobile communication network. For example, the mobile communication network is created over the third generation mobile communication network, or the 4G such as LTE (Long-Term Evolution). The telephony voice communication is exemplarily made over the fourth generation mobile communication network.

The portable voice routing apparatus may simultaneously provide wireless network service for multiple terminal devices. The terminal devices may wirelessly connect with the voice routing apparatus. Not only the voice routing apparatus serves data packets routing function, but also converts the voice signals made by the terminal devices to the packets exchangeable to the mobile communication network. The bi-directional voice communication can be accomplished.

In an exemplary embodiment, main circuits of portable voice routing apparatus are such as a control unit for processing the signals within the portable voice routing apparatus, a mobile communication ID module for recording subscriber identity information, a mobile communication module connected a the mobile communication antenna module, a wireless network module and its connected wireless network antenna module, and a memory module.

The memory module is particularly used to manage a built-in memory or external memory to the portable voice routing apparatus. The memory stores instruction set to be executed for initiating the telephony voice communication in the portable voice routing apparatus. The instruction set includes instruction for receiving connection request generated by one or more terminal devices; instruction for confirming the request for telephony voice communication made by the one or more terminal devices; instruction for generating subscriber identity information; instruction for using network packets to carry the subscriber identity information; instruction for delivering network packets; and instruction for establishing bi-directional telephony voice communication.

The portable voice routing apparatus, according to other embodiments, further includes an image display unit and a power management unit. The mobile communication ID module receives a subscriber ID card for reading out the subscriber identity information.

In one embodiment of the voice routing system established by the portable voice routing apparatus, the system provides means for local-end wireless network, means for mobile communication network, and means for performing telephony voice communication. The system drives the portable voice routing apparatus to establish the bi-directional telephony voice communication by delivering network packets according to the request for telephony voice communication. The system further includes means for handling the regular Internet call.

The flow to implement the method for processing telephony voice communication in an exemplary embodiment includes step of receiving a connection request from a terminal device by the portable voice routing apparatus; step of initiating a mobile communication ID module while the portable voice routing apparatus confirms the request for telephony voice communication, including reading out subscriber identity information; step of carrying the subscriber identity information into network packets; step of delivering the packets to a recipient according to the request for telephony voice communication; and step of establishing connection and starting voice communication when an Internet service provider or telecommunication company transfers the network packets into telephone number.

The portable voice routing apparatus may execute a software program in the process for generating the mentioned connection request and the request for telephony voice communication. Through the software program, the nearby portable voice routing apparatus can be found by broadcasting packets. The software program may also initiate a dialing interface to dial up. The software program generates the request for telephony voice communication and establishes bi-directional voice communication with the recipient.

### BRIEF DESCRIPTION OF THE DRAWINGS

Fig. 1 shows a schematic diagram depicting the voice routing system in an embodiment of the present invention;
Fig. 2 shows a schematic diagram depicting the voice routing system in another embodiment of the present invention;
Fig. 3 shows a diagram having circuit blocks illustrating the portable voice routing apparatus according to one embodiment of the present invention;
Fig. 4 shows a schematic diagram depicting the portable voice routing apparatus conducting communication in one embodiment of the present invention;
Fig. 5 shows a schematic diagram describing communication made by the portable voice routing apparatus in another embodiment of the present invention;
Fig. 6 shows a flow chart illustrating a method for performing a telephony voice communication according to one embodiment of the present invention;
Fig. 7 shows one further flow chart illustrating the method according to one further embodiment of the present invention;
Fig. 8 shows one flow chart illustrating the method according to another one embodiment of the present invention.

### DETAILED DESCRIPTION OF THE PREFERRED EMBODIMENTS

The present invention now will be described more fully hereinafter with reference to the accompanying drawings, in which preferred embodiments of the invention are shown. This invention may, however, be embodied in many different forms and should not be construed as limited to the embodiments set forth herein; rather, these embodiments are provided so that this disclosure will be thorough and complete, and will fully convey the scope of the invention to those skilled in the art.

While the mobile communication network powered by 3rd-generation or 4th-generation of mobile telecommunication technology becomes more popular, more applications incorporating the mobile broadband network have been developed. For example, a portable voice routing apparatus in accordance with the present invention is provided to operate over LTE (Long Term Evolution) or WiMax-powered mobile communication network. By which, the voice routing apparatus constitutes a system, and a method for processing the telephony voice communication.

According to the technology in the disclosure, one of the objectives of the voice routing apparatus is to provide a solution for regular telephony voice communication. In an exemplary embodiment, the system employs the 4th-generation of mobile telecommunication technology to process voice packets switching, so as to conduct the network-based telephony voice communication without time lag caused by network delivery.

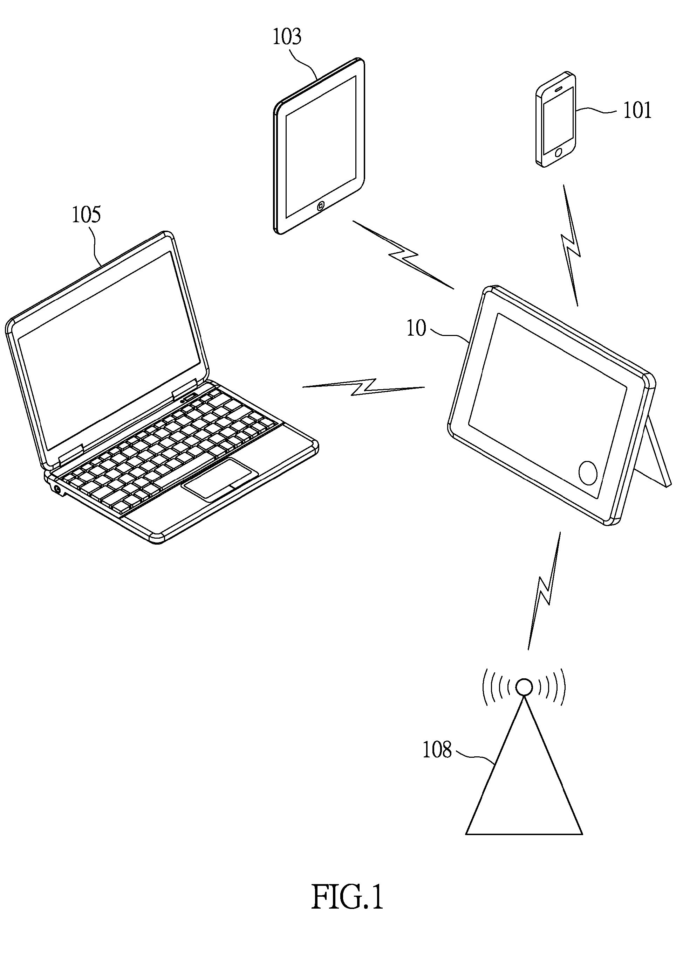

The portable voice routing apparatus is such as a routing apparatus operated over the mobile communication network for operating voice communication. The voice routing system applying the portable voice routing apparatus may be referred to the embodiment depicted in Fig. 1.

A portable voice routing apparatus 10 is shown. The apparatus 10 is featured to perform voice packets routing service for the many local-end terminal devices 101, 103, 105 to link external mobile network station 108. The apparatus 10 simultaneously renders data packets routing and voice packets routing.

The local-end terminal devices 101, 103, 105 employ a near-field wireless communication technology to establish connection with the portable voice routing apparatus 10. For example, the general WiFi™, Near-Field Communication (NFC), Bluetooth™ or the like may implement the connection. The portable voice routing apparatus 10 is permitted to render the data or voice routing when the connections have been established between the apparatus 10 and the terminal devices 101, 103, 105 by the wireless communication technology and necessary verifications.

The portable voice routing apparatus 10 is served as a mobile hot spot for the terminal devices 101, 103, 105 to link with the 3G or 4G mobile communication network. For example, the portable voice routing apparatus 10 is served as the hot spot in compliance with MiFi™ mobile network technology. In addition to data routing, the portable voice routing apparatus 10 is such as a small-scale network-based voice PBX while it serves voice communication routing. The portable voice routing apparatus 10 defines a trunk to the external mobile communication network, for example LTE, WiMax, UMTS. A wireless network connecting port is disposed onto the apparatus 10 for connecting with the local-end devices via WiFi™ network.

In one embodiment of the present invention, a user may make a phone call by one of the terminal devices 101, 103, 105, and the call can be delivered out by the portable voice routing apparatus 10 over the wireless local area network. However, according to one aspect of the present invention, the portable voice routing apparatus 10 may merely process one phone call within one time slot. That means, rather than the conventional VoIP technology, the portable voice routing apparatus 10 may generally allow one of the local-end terminal devices 101, 103, 105 to dial a call just like a normal telephony voice call.

More specifically, in addition to routing the normal telephony voice signals, the portable voice routing apparatus 10 may simultaneously handle data routing. Therefore, as the same time with the data routing for the terminal devices to bridge the mobile communication network, the system with this portable voice routing apparatus 10 still allows the one terminal device to process the telephony voice communication. In the meantime, the other terminal devices may still be able to perform the network voice communication by this system, but not limited by the only one call within the time slot.

In one further embodiment, the portable voice routing apparatus 10 establishes a local area network for the plurality of terminal devices 101, 103, 105. This local area network may internally form an extension telephone system. The portable voice routing apparatus 10 is allowed to specify individual extension numbers for the terminal devices 101, 103, 105 over the multiple connections. For example, when one of the terminal devices issues a request for connecting with the portable voice routing apparatus 10, the apparatus 10 may allocate an extension ID to the requester as the connection is successfully established.

Reference is made to the embodiment described in Fig. 1. The portable voice routing apparatus 10 is configured to provide a wireless local area network port for the internal devices, and a wide area network port for the external systems. For example, the portable voice routing apparatus 10 is bridged with the 4th-generation mobile communication network such as LTE. The external connection is to the LTE-related station. The local-end terminal devices 101, 103, 105 may therefore perform a telephony voice communication by a software program installed in the operating system. The software program may be implemented as a type of APP generally installed in the memory of mobile device. The software program may initiate a dialing interface allowing the user to dial up a normal phone call using a general telephone number. The portable voice routing apparatus 10 then establishes an external voice communication based on the signals generated by the software program. The apparatus 10 may accordingly converts the dialing signals into network packets, and delivers the packets to a recipient.

It is also noted that the signals made by the portable voice routing apparatus 10 may carry the source telephony ID as processing the telephony voice communication. The source telephony ID is such as the subscriber identity information recorded in the subscriber ID module (SIM) carried by the portable voice routing apparatus 10. The subscriber identity information may be provided for the telecommunication company to recognize and transform to the human-accessible telephone number. The related SIM may be disposed with a memory for storing address book and SMS messages.

According to the embodiment in Fig. 1 schematically describing the portable voice routing apparatus 10 in a voice routing system, the apparatus 10 may be a small-scale device carried with battery set, external power port, and a display for showing the operational status. The apparatus 10 is also permitted to upgrade its firmware. The apparatus further provides multiple operational modes, for example the telephone voice routing, data sharing, and data routing, and easily to establish a wireless LAN. The local-end terminal devices 101, 103, 105 within this LAN may access external network resources over the mobile communication network through this apparatus 10. By the 4G mobile network, the apparatus may serve bi-directional telephony voice communication including receiving incoming call and dial outgoing call, and transmitting or receiving SMS messages.

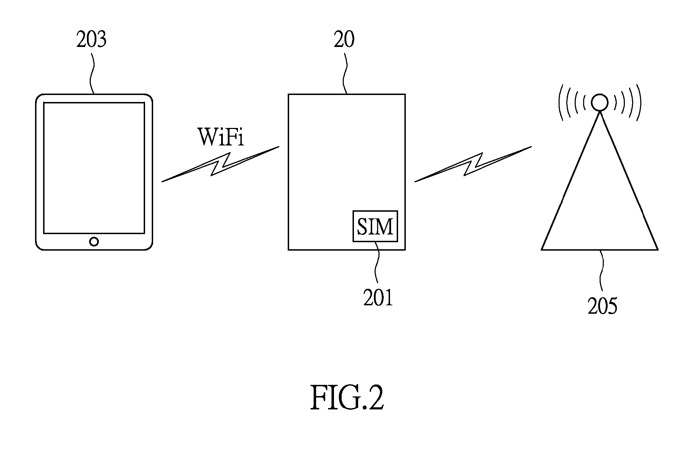

Reference is next made to Fig. 2 schematically depicting a voice routing system in accordance with one embodiment of the present invention.

A terminal device 203 is shown in the diagram. The terminal device 203 is connected with a portable voice routing apparatus 20 via a wireless LAN connection, or by any other near-field wireless communication technology. The communication technology is used to establish a LAN. The LAN is bridged to an external mobile network station 205, for example LTE station. The apparatus 10 is particularly installed with a subscriber ID module (SIM) 201 that records an ID such as a telephone number for recognizing the caller. It is noted that the conventional technologies operating the telephony voice communication made by LTE mobile communication technology are such as IMS (IP Multimedia Subsystem), CSFB (circuit switched fallback) and VoLTE (voice over LTE).

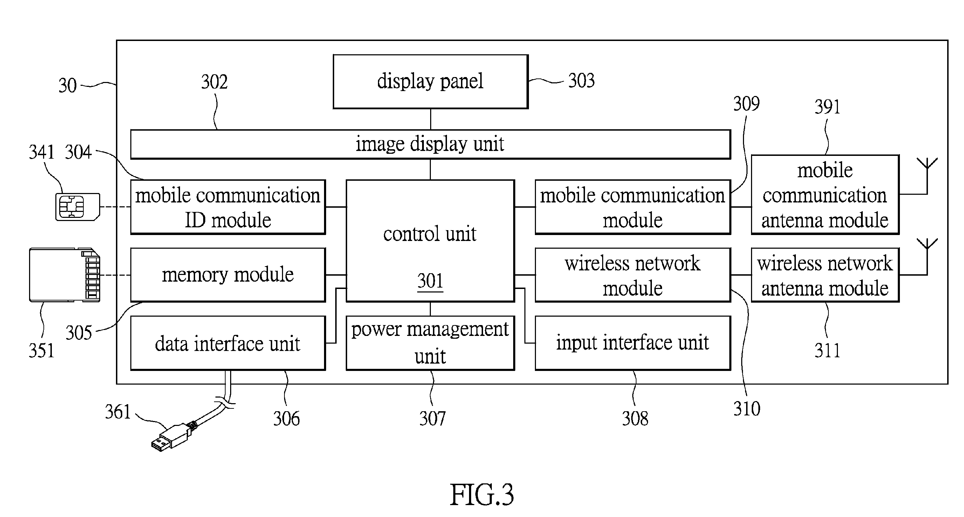

Fig. 3 shows circuit block diagram describing the portable voice routing apparatus in one embodiment of the present invention.

A portable voice routing apparatus 30 is shown in the diagram. The apparatus 30 includes a control unit 301 used to process signals among the circuit units within the apparatus 30. Some more circuit units are electrically connected with this control unit 301. For example those circuit units include an image display unit 302 that is configured to connect with a display panel 303, a mobile communication ID module 304 that receives a subscriber ID card 341, a memory module 305 that receives a memory card 351, a data interface unit 306 that interfaces with a data connector 361, a power management unit 307, an input interface unit 308, a mobile communication module 309 that is connected with a mobile communication antenna module 391, and a wireless network module 310 that is connected with a wireless network antenna module 311. It is noted that the circuit units play as major operations or as minor operations that extend auxiliary functions.

While the image display unit 302 processes the signals generated by the portable voice routing apparatus 30, the display panel 303 displays the operational status, for example the operational mode, network status, power status, status representing failure or fine, or data transmission status.

The mobile communication ID module 304 is one of the requisite elements of the portable voice routing apparatus 30 for performing the mobile communication service. The mobile communication ID module can be plugged with or built in the subscriber ID card 341, for example the SIM card. The mobile communication ID module 304 reads out the subscriber identity information while the subscriber ID card 341 is detected to be plugged into the portable voice routing apparatus 30. The subscriber identity information is such as international mobile subscriber identity (IMSI) or mobile identification number (MIN). The subscriber ID card 341 may carry other information packaged in the telephony voice signals. The information is such as telephone number, ID, and/or address book that can be updated by software.

The data interface unit 306 establishes connection between the apparatus 30 and an external system. The data interface unit 306 is such as a data connector 361 for bridging another computer system over a USB connection. The data interface unit 306 allows the internal devices to exchange data with the external system. For example, the firmware update, data access and software updating for the apparatus 30 may be done via the data interface unit 306. Further, this data interface unit 306 (or data connector 361) allows the apparatus 30 to link with an external power supply. The power is supplied to the portable voice routing apparatus 30 via the USB connection, and also charge the internal battery set. The related status may be displayed onto the display panel 303 through the image display unit 302.

The power supplied to the portable voice routing apparatus 30 is managed by the power management unit 307. The power management unit 307 also manages the external power supply for powering this apparatus 30, and further charging the battery set therein. The power status relevant to the power management unit 307 may be displayed on the display panel 303 through the image display unit 302.

The input interface unit 308 is one of the solutions for the user to control the apparatus 30. For example, the portable voice routing apparatus 30 may be installed with a physical input device such as button(s), keypad and touch panel. The button(s), keypad, or touch panel is provided for the user to operate the apparatus 30; however the software-based virtual keypad may also be one solution for the operations such as power on/off, resetting device, reestablishing connection, switching operational modes, or other functions.

The portable voice routing apparatus 30 in accordance with the present invention simultaneously renders inside wireless communication service and external mobile communication service. The mobile communication module 309 connected with its corresponding mobile communication antenna module 391 is used to process the signals made by the mobile communication protocols such as 3G and 4G services. The wireless network module 310, connected with wireless network antenna module 311, conducts local network protocol for serving the local-end devices.

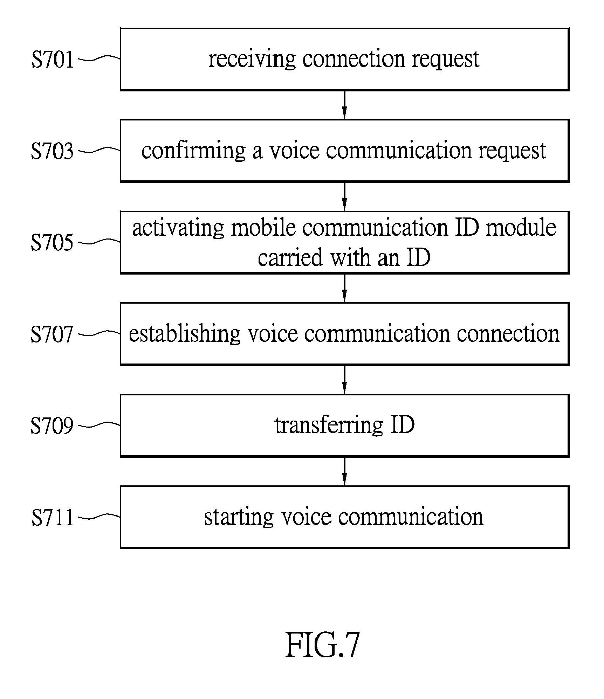

The portable voice routing apparatus 30 has a memory module 305. The memory module 305 is a memory circuit built in or external to the apparatus 30. The built-in memory is such as dynamic memory or flash memory for buffering data, or a static memory for storing operating programs or normal data. The external memory for the apparatus 30 is such as a circuit for receiving an external memory card 351 as expanded storage. The memory may also be used to store the instruction set for instructing telephony voice communication made by this portable voice routing apparatus. Reference is made to the flow chart shown in Fig. 7.

The instruction set includes instruction for receiving connection request made by one or more terminal devices. The portable voice routing apparatus may then receive this connection request form one of the terminal devices. The instruction set includes instruction for confirming the request for telephony voice communication made by the terminal device in next step. When the terminal device does not issue this like request for telephony voice communication, it is determined that the terminal device just request normal data network routing. The instruction set includes instruction for generating subscriber identity information. When the mentioned request for telephony voice communication is confirmed, the portable voice routing apparatus will activate the mobile communication ID module and read out subscriber identity information including user/device ID. The instruction set includes instruction for carrying the subscriber identity information over the network packets for delivery. The subscriber identity information is then delivered over the packets to the recipient. In the process, the Internet service provider or telecommunication company transforms the information into human-accessible telephone number. The instruction set includes instruction for establishing bi-directional telephony voice communication, including establishing the voice call by recognizing the incoming call.

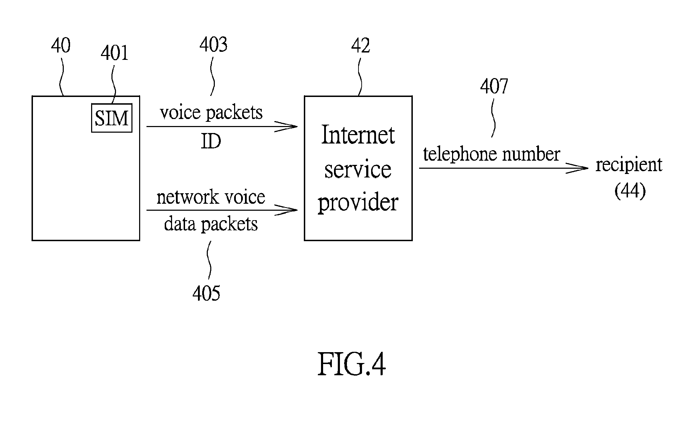

According to practical operation, reference is made to Fig. 4 that schematically describes the communication made by the portable voice routing apparatus in accordance with the present invention.

A portable voice routing apparatus 40 with a mobile communication ID module 401 is provided. The portable voice routing apparatus 40 may simultaneously process data packets routing and voice signals routing. The voice signals may be divided into the voice signals delivered over network, and the telephony voice communication signals carried by network packets. A main difference between the network-based voice signals and the telephony voice communication signals can be recognized by determining whether or not the scheme uses network packets to carry the caller's ID, and allow the reply made by recipient using the ID. The ID is such as the telephone number displayed with the incoming call.

In a first communication mode, the portable voice routing apparatus 40 processes the voice signals made by the local-end device for performing telephony voice communication. The voice signals are then converted into the voice packets 403 deliverable over network. The network packets may carry user/device ID such as subscriber identity information recorded in the subscriber ID card, e.g. SIM card. The subscriber identity information is such as international mobile subscriber identity (IMSI) or mobile identification number (MIN). These types of subscriber identity information may be converted by the ISP 42 (or Telecommunication Company) to the number recognizable to the user. The recognizable number is such as telephone number 407 that will be accompanied with the dialing signals of voice packets, and delivered to the recipient 44.

Rather than using network packets to carry subscriber identity information under the first communication mode, in a second communication mode the portable voice routing apparatus 40 is able to perform normal data exchange work. The apparatus 40 transmits data packets 405 over network, including Internet call. The data packets 405 may also carry network voice signals.

The voice packets made by the Internet call, e.g. VoIP, can carry traditional network ID, the Internet service provider 42 performs data routing according to source ID and target ID. The ID currently is such as IP (Internet Protocol) address, MAC (media access control) address, or the like. The ID related to a recipient is converted to the target ID such as IP and/or MAC.

The data carried with the network packets may be a source IP address, which is such as a public IP of the portable voice routing apparatus 40. The data may also include MAC address of the portable voice routing apparatus 40. The portable voice routing apparatus 40 operates as a router that is used to perform network address translation (NAT) for the private IP.

While the portable voice routing apparatus 40 receives the request for voice communication issued from the local-end terminal device, the apparatus 40 will process the voice packets after passing requisite verification. The request is specified to a communication mode, including a first communication mode and a second communication mode, for processing the voice packets, particularly to the packets carrying the request for first communication mode.

In the first communication mode, the portable voice routing apparatus 40 transmits the voice packets accompanied with the ID recorded in the subscriber ID card to the Internet service provider 42 or any other telecommunication company. The server of the Internet service provider 42 may recognize the ID and convert it into normal telephone number. The telephone number will be delivered to the recipient for making the call when the calling tone is generated.

A bi-directional normal voice call procedure can be established when the recipient receives the request for communication. The information of incoming call recognized by the recipient may be recorded for the recipient to store and make a reply.

It is noted that an extension telephony system may be established in the LAN made by the portable voice routing apparatus 40. A routing table or an extension table is configured by the portable voice routing apparatus 40 to render a comparison chart having the extension numbers and corresponding network addresses. Therefore, if any incoming call enters, the apparatus 40 is able to transfer the incoming call to the correct extension terminal device according to the routing table or extension table. The terminal device may be installed with a software program for executing the telephony voice communication. By this telephony software program, the any outgoing voice communication is operated to transfer the subscriber identity information under the first communication mode.

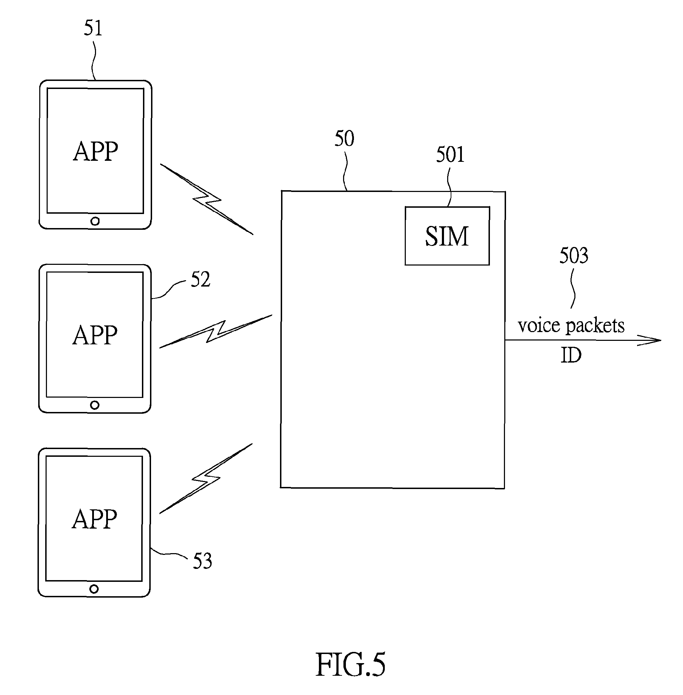

Reference is made to Fig. 5 showing a schematic diagram illustrating the voice communication made by the portable voice routing apparatus. For example, an extension system is constituted of a first terminal device 51, a second terminal device 52, and a third terminal device 53. The devices 51, 52, and 53 may individually establish separate wireless connections with the portable voice routing apparatus 50. The portable voice routing apparatus 50 is installed with a mobile communication ID module 501 for accomplishing telephony voice communication. At the same time, the terminal devices 51, 52, and 53 are still able to link to the external mobile communication network.

According to the current example, the first terminal device 51, the second terminal device 52, and the third terminal device 53 are individually installed with the software programs in their operating systems for executing telephony voice communication. The software program is such as in a form of APP executed in the mobile phone. When the user uses the software program to dial up a call, the portable voice routing apparatus 50 issues a request for voice communication. The request is companied with message for requesting the first communication mode.

After that, the portable voice routing apparatus 50 may receive the requests made by the every terminal device through the software program. The request signals may carry the recipient's information such as telephone number. The signals may be converted into the network packets delivered over the mobile communication network. The network packets also carry the subscriber identity information with respect to the portable voice routing apparatus 50. The information is also delivered to the recipient with the voice packets 503. During the procedure of performing the voice communication under the first communication mode, the Internet service provider or specific telecommunication company transforms the voice packets to the voice signals carried over PSTN; similarly, the voice signals can be carried over the mobile communication network and then to the recipient.

The diagram schematically shows a plurality of terminal devices. The every terminal device is allocated with an ID such as an extension number in this extension system. When one of the terminal devices issues a request for voice communication under the first communication mode, the portable voice routing apparatus 50 takes over this request. In the meantime, the other terminal device(s) is not permitted to use this communication channel, but permitted to perform VoIP or transmit data packets. The extension system is able to establish a conference call among multiple devices through the portable voice routing apparatus 50. Meanwhile, the portable voice routing apparatus 50 transfers voice packets according to the routing table or extension table.

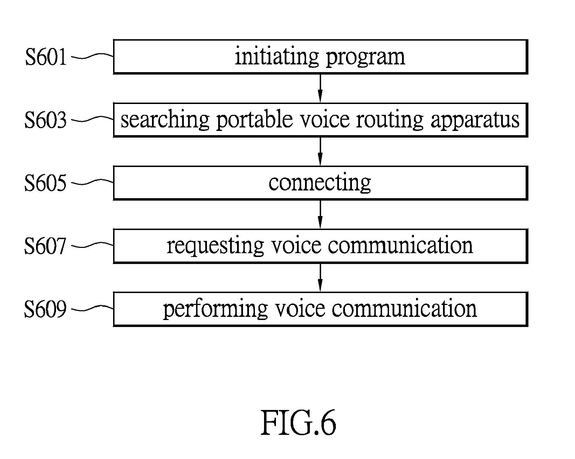

Fig. 6 shows a flow chart illustrating the method for processing the telephony voice communication in accordance with one embodiment of the present invention.

In the beginning of creating the procedure of telephony voice communication, such as step S601, one terminal device initiates the software program to launch a call. The software program is such as the program, e.g. APP, installed in the operating system of smart phone, tablet computer, or any computer system capable of conducting the communication. However, the invention may not be limited to install any aforementioned software program, but automatically generate the request for telephony voice communication while the terminal device dials up.

Next, such as step S603, the terminal device issues broadcast network packets through the software program to scan the nearby portable voice routing apparatus. The portable voice routing apparatus is in charge of establishing connections (step S605). The connection may be the link created within TCP/IP network framework. When the connection is established, the user of the terminal device may make a phone call using the software program. The request for telephony voice communication is then generated and issued to the portable voice routing apparatus (step S607). The portable voice routing apparatus activates the subscriber ID module (SIM) to accomplish the phone call while receiving the request for telephony voice communication. A request for call is then delivered over the mobile communication network by the voice routing apparatus. The recipient performs bi-directional voice communication through the software program when it receives the request sent from the voice routing apparatus (step S609).

It is noted that the software program executed in the terminal device may be a proprietary program for the portable voice routing apparatus to perform the telephony voice communication. On the other hand, the terminal device may firstly check if the portable voice routing apparatus is ready for the telephony voice communication when the voice communication is initiated by the software program. Otherwise, the user may select the network-based VoIP to make the call if the portable voice routing apparatus fails to render the call service or not yet ready. Furthermore, the terminal device may also be a device, e.g. smart phone, tablet computer, which is capable of performing the 2G or 3G call.

The exemplary embodiment of the system incorporating the portable voice routing apparatus shows that the terminal device may automatically switch its own networking capability to render the direct VoIP call if the portable voice routing apparatus fails to provide the routing service. For example, the terminal device may itself render the LTE voice communication by means of IMS, CSFB, or VoLTE.

The flow chart shown in Fig. 7 exemplarily illustrates the method for processing telephony voice communication by the portable voice routing apparatus in accordance with the present invention.

In the beginning of the steps, such as step S701, the portable voice routing apparatus receives a connection request made by one of the terminal devices within the LAN. The apparatus may then confirm the request is made by the specific software program installed in the source terminal device, including the requisite verification. In step S703, the apparatus further confirms whether or not the request is related to the request for telephony voice communication, that means checking if any call comes.

Based on the confirmation, the request may be related to the normal data routing request; rather, the request can be confirmed to be the request for telephony voice communication. After that, in step S705, the portable voice routing apparatus activates the mobile communication ID module, such as the general subscriber ID module recording the subscriber's ID. As reading out the recorded subscriber identity information, for example IMSI, carried with the network packets, the information may be delivered to the recipient who is recognized according to the request for telephony voice communication. The recipient may be recognized by the telephone number extracted from the subscriber identity information. The Internet service provider or telecommunication company transforms the information and accordingly establishes voice communication channel to the recipient, such as step S707. The any ID, e.g. telephone number, is then transmitted to the recipient as in step S709.

When the recipient answers the call, such as step S711, the voice communication has been established over the PSTN, the traditional way, or the network-based voice communication with the required ID.

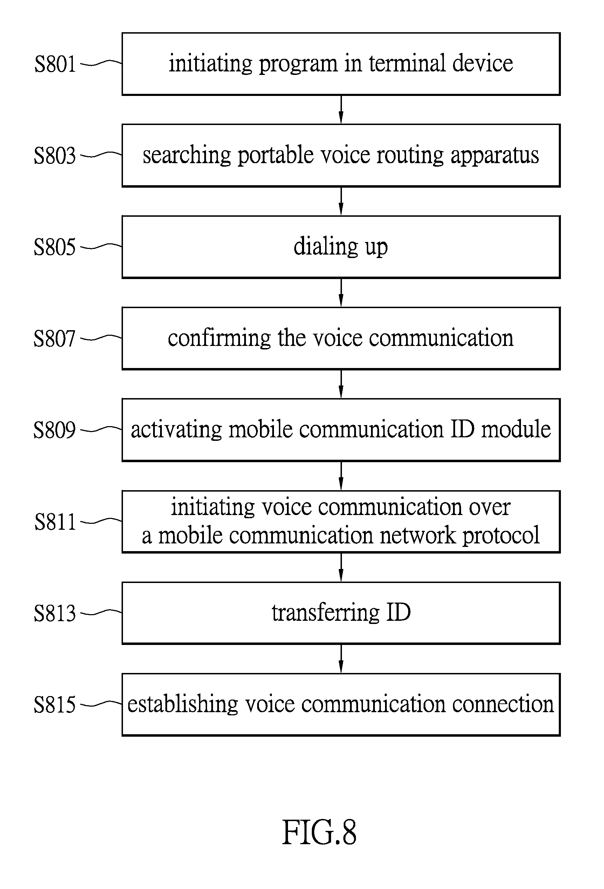

Reference is made to Fig. 8, which illustrates the flow to implementing the telephony voice communication in accordance with the present invention.

It is firstly noted that the terminal device within the system is 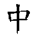 installed with the software program for processing the telephony voice communication. In step S801, a dialing interface initiated by the software program is provided for the user to dial a recipient using telephone number when the program is executed in the terminal device. The software program is executed to use its built-in broadcasting function to scan the nearby portable voice routing apparatus, such as step S803. The scanning is used to confirm if the dialing will be performed through the portable voice routing apparatus.

Next, in step S805, the portable voice routing apparatus confirms the request for telephony voice communication by verifying if the request is made by the software program through the dialing interface in one of the terminal devices (step S807). If the request is confirmed, the apparatus activates the mobile communication ID module (step S809).

The apparatus therefore initiates a voice communication over a mobile communication network protocol, such as step S811. The communication protocol is, but not limited to, the LTE protocol over VoLTE scheme. The ID recorded in the mobile communication ID module will be transferred to the recipient via the ISP or related telecommunication company (step S813), by which establishing a voice communication (step S815).

Thus, rather than the regular network voice communication, the portable voice routing apparatus in accordance with the present invention, and system with the apparatus perform the voice communication, as well transmit both the ID carried with the apparatus and the voice packets to the recipient. The voice call may be transmitted through an Internet service provider bridged to PSTN; or also carried over data network. In particular, the recipient is allowed to reply the call since it gets the ID associated with the incoming call.

It is intended that the specification and depicted embodiment be considered exemplary only, with a true scope of the invention being determined by the broad meaning of the following claims.

## Claims

1. A portable voice routing apparatus (30), comprising:
a control unit (301), used to process signaling within the portable voice routing apparatus (30);
a mobile communication ID module (304), electrically connected with the control unit (301), used to record a subscriber identity information;
a mobile communication module (309) and a mobile communication antenna module (391), which are interconnected and electrically connected with the control unit (301), used to process signals over a mobile communication protocol;
a wireless network module (310) and a wireless network antenna module (311), which are interconnected and electrically connected with the control unit (301), used to perform a local-end network protocol; and
a memory module (305), electrically connected with the control unit (301), used to manage built-in or external memory of the portable voice routing apparatus (30), wherein the memory stores an instruction set for performing telephony voice communication made by the portable voice routing apparatus (30), and the instruction set includes:
instruction for receiving a connection request made by one or more terminal devices;
instruction for confirming the request for telephony voice communication made by the one or more terminal devices;
instruction for generating subscriber identity information;
instruction for carrying the subscriber identity information in network packets;
instruction for transferring network packets; and instruction for establishing bi-directional telephony voice communication.

2. The apparatus of claim 1, further comprising an image display unit (302) used to process signals made by the portable voice routing apparatus (30), and display operational status on a display panel (303).

3. The apparatus of claim 2, further comprising a power management unit (307) used to perform power management for the portable voice routing apparatus (30), wherein power status of the apparatus generated by the power management unit (307) is displayed on the display panel (303) through the image display unit (302).

4. The apparatus of claim 1, wherein the mobile communication ID module (304) receives a subscriber ID card (341), and reads out the subscriber identity information from the subscriber ID card (341).

5. The apparatus of claim 4, wherein the subscriber identity information is an international mobile subscriber identity.

6. A voice routing system established by the portable voice routing apparatus (30) according to claim 1, comprising:
means for connecting the portable voice routing apparatus (30) with one or more terminal devices over a local-end wireless network;
means for bridging the one or more terminal devices to a mobile communication network through the portable voice routing apparatus (30);
means for performing telephony voice communication, in which the every terminal device creates a request for telephony voice communication to the portable voice routing apparatus (30), and the portable voice routing apparatus (30) initiates the mobile communication ID module (304) and reads out the subscriber identity information, and establishes a bi-directional telephony voice communication while the subscriber identity information is carried by network packets; and
means for performing Internet telephoning, in which the every terminal device employs the portable voice routing apparatus (30) to package the voice packets over the mobile communication network.

7. The system of claim 6, wherein the mobile communication ID module (304) receives a subscriber ID card (341), and reads out subscriber identity information from the subscriber ID card (341).

8. The system of claim 6, wherein the request for the telephony voice communication is created when a program executed in the every terminal device performs a dialing.

9. A method for performing a telephony voice communication, comprising:
a portable voice routing apparatus (30) receiving a request for connection from a terminal device;
confirming the request is for telephony voice communication;
activating a mobile communication ID module (304), wherein the mobile communication ID module (304) reads out subscriber identify information from a subscriber ID module;
transferring network packets carrying the subscriber identity information to a recipient according to the request for telephony voice communication;
establishing a call over voice communication connection when an Internet service provider or a telecommunication company transfers the subscriber identity information to a telephone number; and
starting voice communication when the recipient answers the call.

10. The method of claim 9, wherein, a software program is executed by the portable voice routing apparatus (30) for generating the connection request and the request for telephony voice communication, the steps made by the software program comprises:
the software program generating broadcast packets to search the portable voice routing apparatus (30);
the software program initiating call through a dialing interface, and generating request for telephony voice communication; and
establishing a bi-directional voice communication with the recipient.
